# EUROPÄISCHE PATENTSCHRIFT

(11) **EP 2 851 684 B1**
(45) Veröffentlichungstag und Bekanntmachung des Hinweises auf die Patenterteilung: **29.04.2020**
(21) Anmeldenummer: 14186176.5
(22) Anmeldetag: 24.09.2014
(51) Int. Cl.: G01N 30/82, B01D 15/24, G01N 35/00

(54) **Verfahren und Vorrichtung zur Identifikation von Fraktionen in einem Fraktionensammler eines Flüssigkeitschromatographen**
Method and device for identifying fractions in a fraction collector of a liquid chromatograph
Procédé et dispositif d'identification de fractions dans un collecteur de fraction d'un chromatographe en phase liquide

(30) Priorität: 24.09.2013 DE 102013219208
(43) Veröffentlichungstag der Anmeldung: 25.03.2015
(73) Patentinhaber: LABOMATIC INSTRUMENTS AG, CH-4123 ALLSCHWIL (CH)
(72) Erfinder: Marchand, Claude, 4434 Hölstein (CH); Lorenz, Manfred, 72074 Tübingen (DE); Metzger, Martin, 88316 Isny (DE)
(74) Vertreter: Manitz Finsterwald Patent- und Rechtsanwaltspartnerschaft mbB

(56) Entgegenhaltungen:
- EP-A1- 2 080 553
- WO-A1-02/47015
- WO-A2-2008/014117
- US-A1- 2008 164 210

## Beschreibung

Die vorliegende Erfindung betrifft ein Verfahren und eine Vorrichtung zur Identifikation von Fraktionen in einem Fraktionensammler eines Flüssigkeitschromatographen sowie einen zugehörigen Fraktionsaufnahmebehälter.

In der Analytik werden häufig Flüssigkeitschromatographen, etwa bei der Präparativen HPLC (High Performance Liquid Chromatographie), verwendet, um eine Probe auf ihre einzelnen Bestandteile zu untersuchen. In der Chromatographie-Säule wird die Probe in ihre einzelnen Bestandteile d.h. Fraktionen zerlegt, die zeitlich nacheinander aus der Chromatographie-Säule austreten und ebenfalls zeitlich nacheinander einem Detektor zur Analyse zugeführt werden. UV/Vis Spektralfotometer und Differentialrefraktometer sowie Massenspektrometer sind Beispiele für derartige Detektoren.

Die analysierten Fraktionen können in Fraktionsaufnahmebehältern, wie zum Beispiel Reagenzgläsern, für weitere Untersuchungen oder zur Archivierung aufbewahrt werden. Dazu werden die einzelnen Fraktionen nach Verlassen des Detektors über ein 2-Achsen-Positioniersystem Fraktionsaufnahmebehältern zugeführt, die in einem so genannten Rack in Form einer zweidimensionalen Matrix abgelegt sind.

In Laboralltag ist es hin und wieder notwendig, einzelne Fraktionsaufnahmebehälter aus dem Rack zu entnehmen, etwa um weitere Untersuchungen an einer einzelnen Fraktion vorzunehmen. Wenn mehrere Behälter entnommen werden, besteht die Gefahr, dass sie beim Zurückstellen vertauscht werden und so die richtige Zuordnung der einzelnen Behälter zu ihrem Platz in der Matrix verloren geht.

Es wäre wünschenswert, ein Verfahren und eine Vorrichtung zu haben, die ein Verwechseln oder Vertauschen von Fraktionen sicher ausschließt.

Es ist daher die Aufgabe der vorliegenden Erfindung, ein Verfahren und eine Vorrichtung zur Verfügung zu stellen, die dauerhaft sicherstellt, dass eine spezifische Fraktion immer eindeutig identifiziert werden kann.

Diese Aufgabe wird durch ein Verfahren nach Anspruch 1 und einen Fraktionensammler nach Anspruch 5 gelöst. Weitere vorteilhafte Ausführungsformen sind in den abhängigen Ansprüchen angegeben.

Das Beschreiben der RFID-Tags der im Rack befindlichen Fraktionsaufnahmebehälter unmittelbar nach der Detektion kann im Wesentlichen parallel zu deren Befüllen und vorteilhaft automatisiert erfolgen, wodurch eine eindeutige Zuordnung der von dem Detektor gelieferten Informationen zu dem jeweiligen Fraktionsaufnahmebehälter und somit eine jederzeitige eindeutige Identifikation der in diesem enthaltenen Fraktion gewährleistet wird.

Das Beschreiben der RFID-Tags eines jeden Fraktionsaufnahmebehälters wird gemäß Informationen von dem Flüssigkeitschromatographen bzw. dem zugeordnten Detektor mit Hilfe eines Rechners gesteuert.

Damit sind die Informationen des Detektors zur Abspeicherung im RFID-Tag sowie auch die Lageinformation der einzelnen Fraktionsaufnahmebehälter in Bezug auf die analysierte und in den zugeordneten Fraktionsaufnahmebehälter abgegebene Fraktion direkt und eindeutig zugeordnet. Sie sind ferner zu jeder Zeit und an jeder Stelle im Labor wieder auslesbar, solange bis die Probe entsorgt oder anderweitig aus dem jeweiligen Fraktionsaufnahmebehälter entnommen wird. Danach kann der Fraktionsaufnahmebehälter ggf. mit RFID-Tag gereinigt werden. Ferner kann der RFID-Tag wiederverwendet werden, d.h. gelöscht und neu beschrieben werden.

In den RFID-Tags können Informationen gespeichert werden, die zumindest eine der folgenden Informationen umfassen: Probennummer, Retentionszeit, Volumen, Molmasse, Leergewicht des Fraktionsaufnahmebehälters, Gesamtgewicht des Fraktionsaufnahmebehälters mit darin enthaltener Fraktion, zumindest Bestandteile des Chromatogramms, zum Beispiel Peak, Rückverfolgbarkeitsinformation bezüglich des Ursprungs der Probe zur Qualitätssicherung.

Damit stehen für jede Fraktion sämtliche verfügbare Daten leicht zugänglich zur Verfügung, insbesondere auch dann, wenn einzelne Fraktionsaufnahmebehälter aus dem Rack entnommen werden und an einem fernen Ort weiterverarbeitet werden. Das Auslesen der Informationen kann auch über separate Lesegeräte erfolgen. Beim Zurücksetzen des Fraktionsaufnahmebehälters kann dessen richtige Platzierung durch seine eindeutige Identifikation sichergestellt werden. Die Ablage der proben- bzw. fraktionsspezifischen Informationen in dem RFID-Tag rationalisiert zudem die Analysedokumentation.

Die RFID-Tags können an der Unterseite der jeweiligen Fraktionsaufnahmebehälter angeordnet sein. Diese Anbringung ermöglicht es, dass die RFID-Tags sämtlicher Fraktionsaufnahmebehälter eines Racks von unterhalb des Racks jederzeit zugänglich sind

Der Schreib-/ Lesekopf kann die RFID-Tags von unterhalb des Racks anfahren, beschreiben und auslesen. Dazu ist vorteilhafterweise der Schreib-/ Lesekopf an einem 2-Achsen-Positioniersystem unterhalb des Racks angeordnet. Damit ist größtmögliche Flexibilität bei der Positionierung des Schreib-/ Lesekopfes gegeben.

Die Erfindung wird im Folgenden beispielhaft anhand der Zeichnungen beschrieben, in dieser zeigt:
Fig. 1 eine schematische Seitenansicht der erfindungsgemäßen Vorrichtung,
Fig. 2 eine schematische Ansicht von unten der erfindungsgemäßen Vorrichtung.

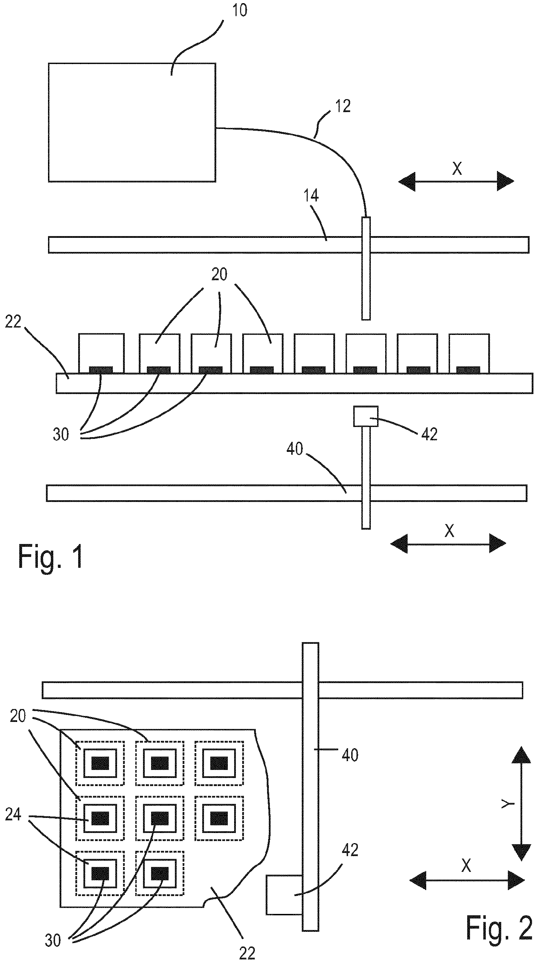

Im Einzelnen zeigt Fig. 1 schematisch in Kasten 10 einen Chromatographen samt zugehöriger Steuereinheit und Detektoren, wobei der Chromatograph ein beliebiger Flüssigkeitschromatograph sein kann und die Detektoren beliebige Detektoren, wie etwa UV/Vis Spektralfotometer und Differentialrefraktometer, sein können. Die in Kasten 10 zusammengefassten Bestandteile können selbst verständlich einzelne Geräte sein.

Nach der Detektion durch den Detektor verlässt die untersuchte Fraktion den Detektor über einen Einfüllschlauch 12 zur Abfüllung in einen Fraktionsaufnahmebehälter 20. Die einzelnen Fraktionsaufnahmebehälter 20 sind in Art einer Matrix in einem Rack 22 aufgenommen und jeweils mit einem RFID-Tag 30 versehen. Die Fraktionsaufnahmebehälter 20 können aus unterschiedlichen Materialien bestehen, zum Beispiel können sie Reagenzgläser oder Kunststoffbehälter sein. Ferner können sie die unterschiedlichste Formen aufweisen, beispielsweise als Glasrohre, Becker oder Schalen vorliegen.

Jeder Fraktionsaufnahmebehälter 20 ist an seiner Unterseite mit einem RFID-Tag 30 versehen, zum Beispiel beklebt.

Unterhalb des Racks 22 befindet sich ein 2-Achsen-Positioniersystem 40, das einen Schreib-/ Lesekopf 42 trägt und in der Lage ist, jeden einzelnen Fraktionsaufnahmebehälter 20 gesteuert von dem Chromatographen bzw. dem Detektor mit der dazugehörigen Steuereinheit (Rechner) von unterhalb des Racks 22 anzufahren. In der Ansicht von Fig. 1 ist nur der Verfahrweg in X-Richtung sichtbar. Der Schreib-/ Lesekopf 42 beschreibt die einzelnen RFID-Tags mit sachdienlicher Information, wie etwa Proben-ID, Retentionszeit, Volumen, Molmasse, Leer- und Füllgewicht des Fraktionsaufnahmebehälters 20, Daten des Chromatogramms, etwa Peak, Qualitätssicherungsinformation, etwa zur Rückverfolgung bis zum Ursprung der Probe. Der Schreib-/ Lesekopf 42 kann diese Informationen bei Bedarf auch wieder auslesen und an eine Rechnereinheit oder Anzeige weiterleiten.

Fig. 2 zeigt die erfindungsgemäße Vorrichtung von unten, so dass beide Verfahrwege des Schreib-/ Lesekopfes 42 in X- und Y-Richtung sichtbar sind. Das Rack 22 ist nur bruchstückhaft dargestellt, so dass nicht sämtliche Fraktionsaufnahmebehälter 20 des Racks 22 zu erkennen sind. Das Rack 22 ist mit Öffnungen 24 versehen, um einen direkten Sichtkontakt zwischen dem Schreib-/ Lesekopf 42 und den entsprechenden RFID-Tags 30 an den Fraktionsaufnahmebehältern 20 zu ermöglichen. Die Außenkontur der Fraktionsaufnahmebehälter 20 ist gestrichelt angedeutet. Anstelle von Löchern im Boden des Racks kann der Boden aus einem RF-transparenten Material gefertigt werden, durch das der RFID-Tag (Radio frequency identification tag) beschrieben und ausgelesen werden kann.

### Bezugszeichenliste

- 10: Chromatograph/Detektor/Steuereinheit
- 12: Einfüllschlauch
- 14: XY-Positioniersystem für Einfüllschlauch
- 20: Fraktionsaufnahmebehälter
- 22: Rack
- 24: Öffnungen
- 30: RFID-Tag
- 40: XY-Positioniersystem für Schreib-/ Lesekopf
- 42: Schreib-/ Lesekopf

## Patentansprüche

1. Verfahren zur Identifikation von Fraktionen in einem Fraktionensammler eines Flüssigkeitschromatographen (10) mit zumindest einem Detektor und einer Steuereinheit, mit den folgenden Schritten:
- Versehen einer Mehrzahl von Fraktionsaufnahmebehältern (20) in einem Rack (22) des Fraktionensammlers mit RFID-Tags (30),
- Befüllen der Fraktionsaufnahmebehälter (20) mit aus der Flüssigkeitschromatographie resultierenden Fraktionen,
- Beschreiben des RFID-Tags (30) eines jeden Fraktionsaufnahmebehälters (20) mit Informationen bezüglich der darin enthaltenen Fraktion,
- Steuern des Beschreibens der RFID-Tags (30) eines jeden Fraktionsaufnahmebehälters (20) gemäß probenspezifischen Informationen von dem Flüssigkeitschromatographen (10) durch die Steuereinheit,
wobei das Beschreiben der RFID-Tags (30) der im Rack (22) befindlichen Fraktionsaufnahmebehälter (20) unmittelbar nach der Detektion im Wesentlichen parallel zu deren Befüllen erfolgt.

2. Verfahren nach Anspruch 1,
**dadurch gekennzeichnet, dass**
in den RFID-Tags (30) Informationen gespeichert werden, die zumindest eine der folgenden Informationen umfassen: Probennummer, Retentionszeit, Volumen, Molmasse, Leergewicht des Fraktionsaufnahmebehälters (20), Gesamtgewicht des Fraktionsaufnahmebehälters (20) mit darin enthaltener Fraktion, zumindest Bestandteile des Chromatogramms, zum Beispiel Peak, Rückverfolgbarkeitsinformation bezüglich des Ursprungs der Probe zur Qualitätssicherung.

3. Verfahren nach Anspruch 1 oder 2,
**dadurch gekennzeichnet, dass**
die RFID-Tags (30) an der Unterseite der jeweiligen Fraktionsaufnahmebehälter (20) angeordnet werden.

4. Verfahren nach einem der Ansprüche 1 bis 3,
**dadurch gekennzeichnet, dass**
ein Schreib-/ Lesekopf (42) die RFID-Tags (30) von unterhalb des Racks (22) anfährt und beschreibt bzw. ausliest.

5. Fraktionensammler eines Flüssigkeitschromatographen (10) mit zumindest einem Detektor umfassend,
- eine Mehrzahl von Fraktionsaufnahmebehältern (20) in einem Rack (22) des Fraktionensammlers,
- RFID-Tags (30) an einem jeden Fraktionsaufnahmebehälter (20),
- einen Schreib-/ Lesekopf (42) zum Beschreiben/Auslesen von RFID-Tags (30), der jeden mit einem RFID-Tag (30) versehenen Fraktionsaufnahmebehälter (20) des Racks (22) anfahren kann und,
- eine Steuereinheit, die derart ausgestaltet ist, dass sie das Beschreiben des RFID-Tags (30) eines jeden Fraktionsaufnahmebehälters (20) gemäß probenspezifischen Informationen von dem Flüssigkeitschromatographen (10) unmittelbar nach der Detektion und parallel zu deren Befüllen steuert.

6. Fraktionensammler nach Anspruch 5,
**dadurch gekennzeichnet, dass**
in den RFID-Tags (30) gespeicherte Informationen zumindest eine der folgenden Informationen umfassen: Probennummer, Retentionszeit, Volumen, Molmasse, Leergewicht des Fraktionsaufnahmebehälters (20), Gesamtgewicht des Fraktionsaufnahmebehälters (20) mit darin enthaltener Fraktion, zumindest Bestandteile des Chromatogramms, zum Beispiel Peak, Rückverfolgbarkeitsinformation bezüglich des Ursprungs der Probe zur Qualitätssicherung.

7. Fraktionensammler nach Anspruch 5 oder 6,
**dadurch gekennzeichnet, dass**
der RFID-Tag (30) an der Unterseite eines jeweiligen Fraktionsaufnahmebehälters (20) angeordnet ist.

8. Fraktionensammler nach einem der Ansprüche 5 bis 7,
**dadurch gekennzeichnet, dass**
der Schreib-/ Lesekopf (42) an einem 2-Achsen-Positioniersystem (40) unterhalb des Racks (22) angeordnet ist.

## Claims

1. A method of identifying fractions in a fraction collector of a liquid chromatograph (10) having at least one detector and having a control unit, comprising the following steps:
- providing a plurality of fraction collection containers (20) in a rack (22) of the fraction collector with RFID tags (30);
- filling the fraction collection containers (20) with fractions resulting from the liquid chromatography;
- writing information to the RFID tag (30) of each fraction collection container (20) that relates to the fraction contained therein; and
- controlling the writing to the RFID tags (30) of each fraction collection container (20) by means of the control unit in accordance with sample-specific information from the liquid chromatograph (10),
wherein the writing to the RFID tags (30) of the fraction collection containers (20) located in the rack (22) takes place directly after the detection substantially in parallel with the filling of said fraction collection containers (20).

2. A method in accordance with claim 1,
**characterized in that**
information is stored in the RFID tags (30) that comprises at least one of the following pieces of information: sample number, retention time, volume, molar mass, empty weight of the fraction collection container (20), total weight of the fraction collection container (20) with the fraction included therein, at least components of the chromatogram, for example peak, or traceability information relating to the origin of the sample for quality assurance.

3. A method in accordance with claim 1 or claim 2,
**characterized in that**
the RFID tags (30) are arranged at the lower side of the respective fraction collection containers (20).

4. A method in accordance with any one of the claims 1 to 3,
**characterized in that**
a read/write head (42) approaches the RFID tags (30) from below the rack (22) and writes or reads them.

5. A fraction collector of a liquid chromatograph (10) having at least one detector, comprising
- a plurality of fraction collection containers (20) in a rack (22) of the fraction collector;
- RFID tags (30) at each fraction collection container (20);
- a read/write head (42) for writing/reading RFID tags (30) which can approach each fraction collection container (20) of the rack (22) provided with an RFID tag (30); and
- a control unit which is configured such that it controls the writing to the RFID tag (30) of each fraction collection container (20) in accordance with sample-specific information from the liquid chromatograph (10) directly after the detection and in parallel with the filling of said fraction collection containers (20).

6. A fraction collector in accordance with claim 5,
**characterized in that**
information stored in the RFID tags (30) comprises at least one of the following pieces of information: sample number, retention time, volume, molar mass, empty weight of the fraction collection container (20), total weight of the fraction collection container (20) with the fraction included therein, at least components of the chromatogram, for example peak, or traceability information relating to the origin of the sample for quality assurance.

7. A fraction collector in accordance with claim 5 or claim 6,
**characterized in that**
the RFID tag (30) is arranged at the lower side of a respective fraction collection container (20).

8. A fraction collector in accordance with any one of the claims 5 to 7,
**characterized in that**
the read/write head (42) is arranged at a 2-axis positioning system (40) below the rack (22).

## Revendications

1. Procédé d'identification de fractions dans un collecteur de fractions d'un chromatographe en phase liquide (10) doté d'au moins un détecteur et d'une unité de commande, comportant les étapes suivantes :
- dotation d'une pluralité de récipients récepteurs de fractions (20) dans un rack (22) du collecteur de fractions de marqueurs RFID (30),
- remplissage des récipients récepteurs de fractions (20) avec des fractions résultant de la chromatographie en phase liquide,
- inscription du marqueur RFID (30) de chaque récipient récepteur de fraction (20) avec des informations se rapportant à la fraction contenue à l'intérieur,
- commande, par l'unité de commande, de l'inscription du marqueur RFID (30) de chaque récipient récepteur de fraction (20) conformément à des informations spécifiques à l'échantillon provenant du chromatographe en phase liquide (10),
dans lequel l'inscription des marqueurs RFID (30) des récipients récepteurs de fractions (20) se trouvant dans le rack (22) s'effectue directement après la détection, sensiblement en parallèle du remplissage de ceux-ci.

2. Procédé selon la revendication 1,
**caractérisé en ce que**
dans les marqueurs RFID (30) sont enregistrées des informations comprenant au moins une des informations suivantes : numéro d'échantillon, temps de rétention, volume, masse molaire, poids à vide du récipient récepteur de fraction (20), poids total du récipient récepteur de fraction (20) avec la fraction contenue, au moins une partie du chromatogramme, par exemple le pic, une information de traçabilité relative à l'origine de l'échantillon à des fins d'assurance-qualité.

3. Procédé selon la revendication 1 ou 2,
**caractérisé en ce que**
les marqueurs RFID (30) sont agencés sur la face inférieure des récipients récepteurs de fractions (20) respectifs.

4. Procédé selon l'une des revendications 1 à 3,
**caractérisé en ce que**
une tête de lecture/écriture (42) s'approche du marqueur RFID (30) et lit ou inscrit sur celui-ci depuis le dessous du rack (22).

5. Collecteur de fractions d'un chromatographe en phase liquide (10) doté d'au moins un détecteur, comprenant
- une pluralité de récipients récepteurs de fractions (20) dans un rack (22) du collecteur de fractions,
- des marqueurs RFID (30) sur chaque récipient récepteur de fraction (20),
- une tête de lecture/écriture (42) destiné à l'inscription/lecture des marqueurs RFID (30), laquelle peut s'approcher de chaque récipient récepteur de fraction (20) du rack (22) qui soit pourvu d'un marqueur RFID (30) et,
- une unité de commande, laquelle est configurée de façon à commander l'inscription du marqueur RFID (30) de chaque récipient récepteur de fraction (20) conformément à des informations spécifiques à l'échantillon provenant du chromatographe en phase liquide (10) directement après la détection et en parallèle du remplissage de ceux-ci.

6. Collecteur de fractions selon la revendication 5,
**caractérisé en ce que**
les informations enregistrées dans les marqueurs RFID (30) comprennent au moins une des informations suivantes : numéro d'échantillon, temps de rétention, volume, masse molaire, poids à vide du récipient récepteur de fraction (20), poids total du récipient récepteur de fraction (20) avec la fraction contenue, au moins une partie du chromatogramme, par exemple le pic, une information de traçabilité relative à l'origine de l'échantillon à des fins d'assurance-qualité.

7. Collecteur de fractions selon la revendication 5 ou 6,
**caractérisé en ce que**
le marqueur RFID (30) est agencé sur la face inférieure d'un récipient récepteur de fraction (20) respectif.

8. Collecteur de fractions selon l'une des revendications 5 à 7,
**caractérisé en ce que**
la tête de lecture/écriture (42) est agencée en-dessous du rack (22) sur un système de positionnement à deux axes (40).
